(19) **Europäisches Patentamt European Patent Office Office européen des brevets**

(11) **EP 4 066 650 B1**

(12) **EUROPEAN PATENT SPECIFICATION**

(45) Date of publication and mention
of the grant of the patent:
**21.02.2024 Bulletin 2024/08**

(21) Application number: **22163432.2**

(22) Date of filing: **22.03.2022**

(51) International Patent Classification (IPC):
*A23L 11/65* (2021.01)    *A23L 2/66* (2006.01)
*A23L 2/38* (2021.01)    *A23L 2/42* (2006.01)
*A23L 2/70* (2006.01)

(52) Cooperative Patent Classification (CPC):
**A23L 2/42; A23L 2/38; A23L 2/66; A23L 2/70;
A23L 11/65**

(54) **METHOD FOR PRODUCING NEUTRAL LIQUID PROTEIN BEVERAGE**

VERFAHREN ZUM PRODUZIEREN EINES NEUTRALEN FLÜSSIGEN PROTEINGETRÄNKS

PROCÉDÉ DE PRODUCTION DE BOISSON PROTÉINÉE LIQUIDE NEUTRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2021 JP 2021054571**

(43) Date of publication of application:
**05.10.2022 Bulletin 2022/40**

(73) Proprietor: **Fuji Oil Holdings Inc.
Izumisano-shi, Osaka 598-8540 (JP)**

(72) Inventor: **BABA, Tsukasa
Osaka, 5988540 (JP)**

(74) Representative: **Becker, Eberhard
Becker Kurig & Partner
Patentanwälte mbB
Bavariastraße 7
80336 München (DE)**

(56) References cited:
**EP-A1- 1 862 079    WO-A1-2020/196425
WO-A1-2020/196440**

EP 4 066 650 B1

**Description**

**BACKGROUND**

Technical Field

The disclosure relates to a method for producing a neutral liquid protein beverage.

Description of Related Art

Proteins are polymers and have gelling properties, thickening properties, and water retention properties. Powdered plant-based protein products represented by soy protein isolate (SPI) and the like containing a high concentration of protein are easier to distribute and easier to manage in storage compared to liquid products because powdered plant-based protein products do not contain water. Further, since the products can be incorporated into processed foods at a high concentration, the products are also widely used as a material for improving physical properties in various processed foods.

For example, soy proteins have a well-balanced amino acid composition and have a physiological function represented by a serum cholesterol lowering action. Therefore, soy proteins are used in nutritional and health-promoting foods that are expected to have nutritional and physiological functions.

According to the "2011 White Paper on Aging Society" released by the Cabinet Office of Japan, it is stated that the population of elderly people aged 65 and over will reach a record high of 29.58 million, with one in five people being elderly. A super-aged society (a society in which the percentage of elderly people aged 65 and over in the total population exceeds 21%) is imminent. Under these circumstances, the goal set forth in "Health Japan 21" promoted by the Ministry of Health, Labor and Welfare of Japan is to extend healthy life expectancy. "Healthy life expectancy" here refers to the period during which it is possible to live without any illness or disability, and is expressed as healthy life expectancy (average independent period) = average life expectancy - non-independent period (period during which health is impaired and it is not possible to live independently).

Ingestion of the required amount of nutrient components is essential for extending healthy life expectancy. In particular, proteins are essential substances for the maintenance of life, build tissues, and perform various functions. According to the "Dietary Reference Intakes for Japanese" (2010 edition) presented by the Ministry of Health, Labor and Welfare, the recommended intake of protein is 60 g per day even for the elderly aged 70 and over, which is the same as for general adults. However, in general, elderly people are inactive in their daily activities. Accordingly, the appetite of the elderly is reduced, and food intake is reduced. Therefore, in the case of elderly people, it is necessary to efficiently ingest protein with a small amount of intake.

Under these circumstances, food manufacturers are focusing on developing processed foods for the purpose of supplementing plant-based protein by utilizing the excellent nutritional and physiological functions of plant-based protein. As one such type of processed foods, there is a liquid protein beverage having a near-neutral pH (hereinafter abbreviated as "neutral liquid protein beverage"). However, neutral liquid protein beverages are microbiologically more perishable than acidic liquid beverages with a pH of less than 4. Therefore, when the beverage is packed in a closed container and distributed, the production of the beverage must undergo a sufficient heat sterilization step under stricter heating conditions than those of the acidic liquid beverage in order to control microorganisms.

Here, powdered plant-based protein materials such as soy protein isolate have high protein contents, and are therefore suitable for the purpose of fortifying proteins into a beverage. In addition, since the material is in the form of powder and can be adjusted to any concentration before use, unlike a material containing a large amount of water, such as soy milk, it is advantageous that the amount to be incorporated into the beverage for adding protein does not affect the water content of the entire beverage.

Patent Documents

[Patent Document 1] Japanese Patent Laid-Open No. 2006-75064
[Patent Document 2] Japanese International Publication No. WO 2003/22069 WO2020/196425A1
WO2020/196440A1
EP1862079A1

## SUMMARY

However, when a large amount of powdered plant-based protein material is added to a neutral liquid protein beverage for the purpose of fortifying protein, generally, when the powdered plant-based protein material is prepared with water, the viscosity of the preparation solution becomes significantly high due to the water retention properties, and there is a problem that the process suitability is impaired.

Therefore, Patent Document 1 discloses a beverage using peptides derived from soy protein. When these peptides are small molecule peptides hydrolyzed to a high degree by proteolytic enzymes, the peptides have low viscosity and high solubility, and exhibit relatively stable properties in beverages. However, the problems are that a unique bitterness and odor are caused and cost increases.

Further, when the peptides which are partially hydrolyzed to a low degree by proteolytic enzymes are used, the viscosity of the preparation solution can be lowered, but the solubility after heat sterilization is lowered.

In addition, the powdered plant-based protein material having high solubility absorbs water instantly at the time of preparation with water and a large amount of lumps are formed, which causes a problem of impairing process suitability.

In order to solve this, a technology of adding a divalent metal salt for insolubilization, a technology of enzymatically decomposing to lower the viscosity, and a granulation technology are used, and accordingly, it is possible to suppress the generation of lumps. For example, it is described that the powdered soy protein material of Patent Document 2 has excellent water dispersibility without using a powerful stirrer by the technology of granulating the powdered soy protein material with dextrin having a specific DE value.

However, the material is pursued for use in products that require good temporary dispersibility with respect to water, such as powdered beverages.

Further, in the case of a neutral liquid beverage, a strong heat sterilization treatment is indispensable. Therefore, when a powdered plant-based protein material containing a divalent metal salt or an enzymatically decomposed powdered plant-based protein material is applied to a neutral liquid beverage, coarse agglomerates are formed in the heat sterilization step of the beverage. As a result, the quality of the final product is impaired, for example, by the occurrence of roughness or precipitation. Therefore, it is difficult to apply Patent Document 2 to neutral liquid protein beverages that require long-term storage stability.

Moreover, the powdered plant-based protein material in the dry powder state needs to be hydrated again, and adding the powdered plant-based protein material at a high concentration to stabilize the dispersion is more difficult than adding, for example, liquid soy milk.

WO2020/196425 discloses a method for producing a neutral liquid protein beverage having a protein content of 1% by weight or more and a pH of 5.75 to 8, characterized by adding a powdered vegetable protein material with the following properties A) NSI is 80 or more, B) The powdered vegetable protein material is a protein hydrolyzate, the degree of hydrolysis is a 0.22M TCA solubility rate of 5 to 30%.

WO2020/196440 discloses a method for producing a bread containing 5 to 20% by weight of vegetable protein with respect to flour, and a powdered vegetable protein material satisfying at least the following requirements A) to C) as a source of vegetable protein in bread dough: A) Protein content in solid content is 80% by weight or more, B) pH of 10% by weight solution is pH 6-8, C) Nitrogen dissolution index (NSI) is 30 or less, D) 0.22M TCA solubility rate is less than 10%.

EP1862079A1 discloses a process for producing a soybean protein which comprises performing two steps of (A) adding an Mg compound to a soybean protein slurry or solution and (B) adding a protease to the soybean protein slurry or solution to carry out protein hydrolysis. Performing two steps of (A) adding an Mg compound, particularly MgO, preferably in combination with a Ca compound, to a soybean protein slurry or solution and (B) adding a protease to the soybean protein slurry or solution to carry out protein hydrolysis produced a soybean protein whose flavor and dispersibility were both satisfactory.

In view of the above-described circumstances, the disclosure provides a method for producing a neutral liquid protein beverage that has process suitability such as low viscosity and high dispersibility of a preparation solution without impairing the flavor and taste even when a relatively large amount of plant-based protein is incorporated into the neutral liquid protein beverage.

As a result of diligent research, the present inventors have found a powdered plant-based protein material having specific characteristics, and by adding this, have obtained knowledge that allowed them to solve the above-described problems, and have completed the disclosure.

The present invention is defined by the claims.

In other words, the disclosure includes the following configurations.

(1) According to an embodiment of the disclosure, there is provided a method for producing a neutral liquid protein beverage having a pH of 6 to 8 and a protein content of 1 to 15% by weight, in which a powdered plant-based protein material that satisfies the following requirements A) to E) is dispersed in a raw material solution, and then the raw material solution is heat-sterilized to dissolve the powdered plant-based protein material.

A) Protein content in a solid content is 80% by weight or more,
B) pH of 10% by weight aqueous solution is pH 5.5 to 8,
C) Nitrogen solubility index (NSI) is 30 or less,
D) 0.22 M trichloroacetic acid solubility rate in the powdered plant-based protein material is 4.5% or less, and
E) Bulk density is 0.5 g/cm$^3$ or more.

(2) According to the embodiment, in the method for producing a neutral liquid protein beverage, a calcium content with respect to protein in the powdered plant-based protein material is 0.6% by weight or less, and a magnesium content with respect to protein is 0.3% by weight or less.

According to the disclosure, it is possible to provide a method for producing a neutral liquid protein beverage that has process suitability such as low viscosity and high dispersibility of a preparation solution without impairing the flavor and taste even when a relatively large amount of plant-based protein is incorporated in the neutral liquid protein beverage.

More specifically, according to the present production method, since a specific powdered plant-based protein material has a high bulk density and a small amount of powdering, it is possible to increase the efficiency of input into the preparation tank at the time of preparation. In addition, according to this production method, when a specific powdered plant-based protein material is prepared with water, the powdered plant-based protein material can be easily dispersed without producing lumps, the viscosity is also low, and thus workability in the preparation step can be improved. Further, according to this production method, in the heat sterilization step, a specific powdered plant-based protein material is easily solubilized in water from the dispersed state when heat-treated, and thus it is possible to provide a production method that achieves both the process suitability before the heat treatment and the beverage suitability after the heat treatment.

## DESCRIPTION OF THE EMBODIMENTS

Hereinafter, embodiments of the disclosure will be described in detail.

(Neutral liquid protein beverage)

The neutral liquid protein beverage (hereinafter referred to as "this beverage") which is the subject of the disclosure is commercialized in a liquid state and consumed by consumers. Beverages that have recently been called ready-to-drink (RTD) beverages and concentrated liquid foods are conceptually included here.

In one typical distribution form, a sealed container is aseptically filled with this beverage and sealed, and this beverage is sold to consumers as it is as a beverage packed in the sealed container. In another distribution form, the beverage is provided in a server at a restaurant and poured into a cup or the like according to the request of the consumer. Therefore, it is strictly required that the insolubilized protein be less likely to precipitate even when this beverage is stored in a liquid state for a long period of time. The effects of the disclosure are particularly exhibited in the form of liquid beverages, most notably in the form of a beverage packed in a sealed container, which is stored for a longer period of time.

The liquid properties of this beverage indicate near-neutral pH 6 to 8. In particular, the pH of this beverage is preferably pH 6.2 to 7.8, more preferably pH 6.4 to 7.6, more preferably pH 6.6 to 7.4, and even more preferably pH 6.8 to 7.2. Which pH value should be selected within this range can be appropriately set by those skilled in the art in consideration of quality such as flavor of the product.

In addition, the term "neutral" in the present specification does not limit the pH to only 7, but also refers to the above-described near-neutral pH range in a broad sense.

In a preferred aspect, this beverage is a plant-based neutral liquid protein beverage. "Plant-based" means a composition composed based on plant-derived raw materials. Specifically, the proportion of animal-derived ingredients in all the raw materials of this beverage is, in terms of solid content, preferably 50% by weight or less, more preferably 40% by weight or less, 30% by weight or less, 20% by weight or less, 10% by weight or less, 5% by weight or less, 3% by weight or less, 2% by weight or less, 1% by weight or less, 0.5% by weight or less, or 0% by weight.

(Protein)

This beverage contains at least protein as a nutrient component.

The protein content in this beverage is 1% by weight or more in this beverage. Furthermore, the protein content is preferably as high as possible so that the effect of the disclosure can be effectively exerted, preferably 1.5% by weight or more, more preferably 2% by weight or more, and still more preferably 2.5% by weight or more. Further, the upper limit of the protein content is 15% by weight or less, and can be further 10% by weight or less. Many plant-based proteins such as soy protein aggregate due to denaturation caused by strong heating during the production process of this beverage, and precipitation or separation of the protein is likely to occur in this beverage. In addition, the degree of precipitation or separation tends to increase as the product is stored for a long period of time, and the precipitation and separation during storage greatly impair the commercial value. Meanwhile, in the disclosure, such a problem is solved even when the plant-based protein is highly contained.

The protein contained in this beverage is derived from at least one plant-based protein. Examples of the types of plant-based proteins include proteins derived from beans (for example, soybeans, peas, green beans, chickpeas, cowpeas, and broad beans), canola seeds, wheat, rice, hemp, and walnuts, but the origin of powdered plant-based protein materials which will be described later is not particularly limited as long as the origin satisfies the necessary requirements. In one embodiment, as the type of plant-based protein, soybean-derived protein, which is widely distributed and raw materials of which are easy to obtain, can be selected.

(Powdered plant-based protein material)

The protein in this beverage is contained in whole or in part as a result of the addition of the protein material containing the above-described plant-based protein to this beverage. Here, one essential and important protein material in the method for producing this beverage is a specific "powdered plant-based protein material" described in detail below.

Here, the term "powdered plant-based protein material" used in the present specification refers to a food material mainly composed of a plant-based protein having a powdered product form.

An example of producing a typical powdered plant-based protein material will be described. When the plant is soybean, defatted soybean flakes are used as a soybean raw material, this is dispersed in an appropriate amount of water for water extraction, and the insoluble fraction mainly composed of fiber is removed to obtain extracted soy protein (defatted soy milk). The extracted soy protein is adjusted to approximately pH 4.5 with an acid such as hydrochloric acid, and the protein is isoelectrically precipitated to remove the acid-soluble fraction (whey). Then, the acid-insoluble fraction (curd) is dispersed again in an appropriate amount of water to obtain a curd slurry, neutralization is performed with an alkali such as sodium hydroxide to obtain a neutralized slurry, and the soy protein isolate obtained from the neutralized slurry is obtained. The soy protein isolate is heat-sterilized by a high-temperature heat treatment device in a solution state, spray-dried by a spray dryer or the like, and finally commercialized as a powdered soy protein material. Raw materials other than soybean can also be obtained in the same manner as described above. Further, the method is not limited to the above-described production method, and a method such as membrane filtration in which the purity of soy protein is increased from the soybean raw material may be used.

(Characteristics of powdered plant-based protein)

It is essential that the specific powdered plant-based protein material (hereinafter referred to as "this protein material") itself, which is added to this beverage, has characteristics that satisfy at least the requirements of A) to E) below. Hereinafter, these requirements will be described more specifically.

A) Protein content

It is appropriate that the protein content in a solid content of this protein material is at least 80% by weight or more, and preferably 85% by weight or more or 90% by weight or more. Higher protein content is preferable because a high-protein beverage can be produced with a smaller amount of addition.

Meanwhile, in this protein material, it is preferable that the content of insoluble dietary fiber be as low as possible in order to increase the protein content. Further, since the protein material is added to a liquid beverage, it is preferable that the content of insoluble dietary fiber be as low as possible in order to prevent precipitation of insoluble matter during storage. Specifically, the content of the insoluble dietary fiber in this material is more preferably 2% by weight or less, 1% by weight or less, or 0.5% by weight or less in a solid content. The content of insoluble dietary fiber shall be measured by Prosky's variation in accordance with the "Fifth Edition of Manual for the Standard Tables of Food Composition" (Materials of the Food Composition Subcommittee of the Resources Research Committee of the Science and Technology Agency (1997)).

B) pH of 10% by weight aqueous solution

It is important that the pH of 10% by weight aqueous solution of this protein material is 5.5 to 8. Preferably, it is appropriate that pH is within the range of 6 to 7.5, and more preferably 6.5 to 7. When the pH of the aqueous solution is in the above-described range, extra pH adjustment is not required when producing a neutral liquid beverage, which contributes to improvement of process suitability.

C) Nitrogen solubility index (NSI)

It is important that this protein material has low solubility in water, that is, the nitrogen solubility index (NSI) as an index of solubility in water is 30 or less. In a more preferred aspect, NSI may be 29 or less, 28 or less, 27 or less, 26 or less, or 25. The lower limit of NSI is not particularly limited, and may be 5 or more, 10 or more, 15 or more, or 20 or more. In addition, NSI is expressed by the proportion (% by weight) of water-soluble nitrogen (crude protein) to the total amount of nitrogen based on the predetermined method which will be described later, and in the disclosure, NSI is a value measured according to the method which will be described later.

When the NSI is extremely high, the powdered plant-based protein material has extremely high water retention properties, and the viscosity at the time of preparing the preparation solution becomes high, and lumps are likely to be generated due to instant water absorption. Accordingly, the efficiency of the preparation step of the preparation solution is lowered, and this eventually leads to a decrease in the production efficiency of the neutral liquid beverage, which is not preferable. The fact that NSI is within the above-described range facilitates the preparation of the preparation solution and contributes to the improvement of process suitability.

As means for imparting low NSI characteristics as in this protein material, there is means for adding a divalent metal salt such as a calcium salt or a magnesium salt to react the protein with the divalent metal to insolubilize the protein. However, the addition of many calcium salts or magnesium salts to this protein material causes the formation of irreversible insoluble proteins. Accordingly, coarse aggregation occurs due to heat sterilization during the production process of this beverage. Therefore, it may be difficult to ensure the desired quality of this beverage due to the deterioration of the taste due to the occurrence of roughness, or the occurrence of precipitation during storage.

Therefore, in a preferred aspect, the calcium content with respect to the protein in this protein material may be 0.6% by weight or less, and the magnesium content with respect to the protein may be 0.3% by weight or less. The calcium content can be further 0.55% by weight or less, 0.5% by weight or less, 0.4% by weight or less, 0.3% by weight or less, or 0.2% by weight or less. The magnesium content can be further 0.2% by weight or less, 0.15% by weight or less, or 0.1% by weight or less. Furthermore, this protein material may be a material to which no calcium salt and/or magnesium salt is added during production. The contents of calcium and magnesium are measured by an official atomic absorption method.

D) 0.22 M trichloroacetic acid solubility rate

It is important that the protein of this protein material is not hydrolyzed by protease or the like. A 0.22 M trichloroacetic acid solubility rate (hereinafter referred to as "TCA solubility rate") can be used as an index of the fact that the hydrolysis has not been carried out. The numerical value is the proportion of protein dissolved in 0.22 M trichloroacetic acid to the total protein in the dispersing liquid obtained by dispersing the powdered plant-based protein material in water so as to have a protein content of 1.0% by weight and sufficiently stirring the mixture, was measured by the Kjeldahl method. As the hydrolysis of the protein progresses, the value of TCA solubility rate increases.

This protein material is characterized in that the TCA solubility rate is 4.5% or less. This protein material having a TCA solubility rate in this range is solubilized in water by the heat sterilization step during the production process of this beverage without causing irreversible aggregation, and a beverage with a good taste can be produced. While a powdered plant-based protein material having a higher TCA solubility rate, that is, enzymatically decomposed, can suppress the viscosity of the preparation solution, irreversible aggregation occurs in the above-described heat sterilization step, which is not preferable.

E) Bulk density

It is important that the bulk density of this protein material is 0.5 $g/cm^3$ or more. The bulk density may be 0.55 $g/cm^3$ or more, 0.6 $g/cm^3$ or more, or 0.65 $g/cm^3$ or more. Incidentally, in a case of "FUJIPRO F" (manufactured by Fuji Oil Co., Ltd.), which is a typical soy protein isolate, the bulk density is approximately 0.45 $g/cm^3$.

Since the bulk density is within the above-described range, this protein material has a large specific gravity and a low bulk, that is, properties like "fine sand", and has less powdering. At the time of preparation in the production process of the neutral liquid protein beverage, the work speed when preparing the same weight is increased, and the efficiency of input into the preparation tank can be improved.

In addition, the bulk density is measured using "POWDER TESTER model PT-X" (manufactured by HOSOKAWA MICRON CORP.) with the tapping frequency set to 180 times.

(Production of this protein material)

Hereinafter, reference aspects for producing this protein material, which satisfy all the requirements A) to E) of the disclosure, will be described below by taking a case of soybean as an example. However, the technical idea of the disclosure is essentially to apply this protein material having the characteristics of requirements A) to E) to the production of this beverage. Therefore, it is natural that the production method of this protein material is not limited to a specific plant type or a specific production aspect.

In order to produce this protein material, the process of producing soy protein isolate of the related art can be used as a base as described below. However, as a method for concentrating proteins, a general method by acid precipitation can be adopted, a concentration method by membrane filtration, a method of extracting water from concentrated soy protein, or the like can also be adopted.

As a soybean raw material for extracting protein, defatted soybeans are generally used, but full-fat soybeans and partially defatted soybeans can also be used. When full-fat soybeans or partially defatted soybean are used, high-speed centrifugation is performed after the extraction step to remove the oil separated in the upper layer, and low oil differentiation can be achieved.

Next, the soybean raw material and water are mixed and dispersed in a slurry state, and if necessary, the protein is extracted while stirring.

Next, the insoluble dietary fiber (Okara) is removed from the slurry by separation means such as a centrifugal separator or a filter to obtain an extracted soy protein solution (soy milk).

Next, the acid-soluble fraction (whey) such as oligosaccharide and acid-soluble protein is removed from the extracted soy protein solution to obtain a concentrated solution of soy protein. An acid precipitation method can be used as typical means, and the pH of the extracted soy protein solution is adjusted to the vicinity of the isoelectric point of 4 to 5 with an acid such as hydrochloric acid or citric acid to insolubilize and precipitate the protein. Next, the acid-soluble fraction is removed by the separation means such as a centrifugal separator or a filter, and the acid-insoluble fraction "curd" is collected and dispersed again in an appropriate amount of water to obtain a curd slurry. Examples of means for concentrating soy protein other than the acid precipitation method include ultrafiltration and the like.

Then, the obtained curd slurry is finally adjusted to approximately pH 7 to obtain a neutralized slurry. Then, heat sterilization is performed by high-temperature heat treatment at least once during the entire process. As the heat treatment, a direct steam blowing type high temperature instantaneous heat treatment is preferable. The heat treatment is a UHT sterilization method in which high-temperature and high-pressure steam is directly blown into a soy protein solution, heated and held, and then the pressure is rapidly released in a vacuum flash pan. The heat treatment conditions are within the range of 100 to 170°C, preferably 110 to 165°C, and the heating time is preferably 0.5 seconds to 5 minutes, preferably 1 second to 120 seconds. At this time, the solution or slurry containing the soy protein which is a target of the heat treatment is heat-treated within the range of 3 to 12 depending on the pH adjusted at each stage of the production process, but a commercially available heat sterilizing device that uses a heat treatment method can be used, and a VTIS sterilizing device (manufactured by Alfa Laval), a jet cooker device, or the like can be used. Finally, drying is performed with a spray dryer or the like to obtain a powdered soy protein material. As a method of drying with a spray dryer, either a disk-type atomizer method or spray drying with a one-fluid or two-fluid nozzle can be used.

Here, in order to obtain a powdered soy protein material that satisfies all the requirements of A) to E) of the disclosure, the following steps can be adopted in any manner. In one embodiment, in the step of removing the insoluble dietary fiber from the slurry after the extraction step to obtain the extracted soy protein solution, long-term centrifugal separation is performed or plural times of centrifugal separation is performed so as to minimize the contamination of the insoluble dietary fiber as much as possible, and the content of insoluble dietary fiber is 1% by weight or less, preferably 0.5% by weight or less, or more preferably 0.2% by weight or less in the powdered soy protein material of the final product. In another aspect, it is also possible to select not to add the above steps. Further, in an embodiment, in the production process of this protein material, a pectic polysaccharide such as a water-soluble soybean polysaccharide, a water-soluble pea polysaccharide, or pectin, or a water-soluble polysaccharide such as an alginate ester can be added. In the production process of this protein material, the addition of the water-soluble polysaccharide is achieved by adding the water-soluble polysaccharide into a solution containing a plant-based protein and mixing the solution well in a step prior to the spray-drying step. According to this, this water-soluble polysaccharide becomes an integrated state where physical separation from this protein material is not possible.

This protein material that satisfies all of the above requirements A) to E) can be obtained by purchasing from a manufacturer of plant-based protein material, for example, Fuji Oil Co., Ltd. or by requesting the manufacturer to produce the plant-based protein material.

Incidentally, Fuji Oil Co., Ltd. can provide a new powdered plant-based protein material having all the characteristics of A) to E) above. Therefore, those skilled in the art can easily obtain the product when the new powdered plant-based protein material is designated. All of the commercially available powdered soy protein materials of the related art such as "Fujipro" series, "New Fujipro" series, and "Prolina" series do not correspond to the powdered plant-based protein materials that satisfy all the characteristics of A) to E) above. Therefore, even when these are used, these cannot be applied to this production method.

(Other raw materials incorporated into beverages)

In any of the embodiments, in this beverage, various raw materials may be incorporated in addition to this protein material described above according to the product design of those skilled in the art. The types and adding amounts of other raw materials are not particularly limited.

For example, various fruit juices (citrus, grapes, and the like), sugars (sucrose, fructose-dextrose liquid sugar, dextrin, and the like), sweeteners (sucralose, aspartame, and the like), fats and oils (rapeseed oil, soybean oil, EPA, DHA, and the like), protein dispersion stabilizer (carboxymethyl cellulose, microcrystalline cellulose, and the like), emulsifiers (resitin, fatty acid esters, and the like), pH adjusters (citric acid, fumaric acid, tartaric acid, phosphoric acid, sodium hydroxide, sodium bicarbonate, and the like), minerals (potassium salt, sodium salt, magnesium salt, calcium salt, iron salt, and the like), vitamins (A, B, C, D, E, P, K, and the like), chelating agents (sodium citrate, polyphosphate, and the like) fragrances, physiological functional materials (isoflavone, saponin, lactic acid bacteria powder, peptides, glucosamine, and the like) and the like can be appropriately incorporated.

(Production of neutral liquid protein beverages)

This beverage can be produced by a known method, and can be produced through steps such as preparation of raw materials, water addition, stirring, dissolution, pH adjustment, homogenization (homogenizer and the like), filling a container, sealing, and heat sterilization. These steps can be reordered in any manner and can be performed plural times. In particular, since this beverage is neutral, heat sterilization is carried out with respect to the neutral beverage by the method and conditions officially determined for the control of microorganisms. As the heat sterilizing device, a plate type sterilizer, a tube type sterilizer, or the like is generally used. The conditions for heat sterilization can be, for example, approximately 120 to 150°C for 1 to 60 minutes.

(Measuring method)

The analysis value in the disclosure shall follow the following measuring method.

<pH measuring method>

To 40 g of the sample, 360 ml of 25°C ion-exchanged water is added, and the mixture is stirred with a homomixer for 5 minutes to completely dissolve the sample. The obtained solution is measured with any pH measuring instrument.

<NSI measuring method>

60 ml of water is added to 3 g of the sample and stirred with a propeller at 37°C for 1 hour, and then the mixture is centrifuged at $1400 \times g$ for 10 minutes to collect a supernatant (I). Next, 100 ml of water is added to the remaining precipitate again, stirred with the propeller again at 37°C for 1 hour, and centrifuged to collect a supernatant (II). The solution (I) and the solution (II) are combined, and water is added to the mixed solution to make 250 ml. This is filtered through a filter paper (NO. 5), and then the nitrogen content in the filtrate is measured by the Kjeldahl method. At the same time, the amount of nitrogen in the sample is measured by the Kjeldahl method, and the proportion of the amount of nitrogen (water-soluble nitrogen) collected as a filtrate to the total amount of nitrogen in the sample is expressed as % by weight, which is defined as NSI.

[Examples]

Hereinafter, embodiments of the disclosure will be described in more detail with reference to Examples and the like. In addition, "%" and "part" in the example indicate "% by weight" and "part by weight" unless otherwise specified. As the various powdered plant-based protein materials used as the test materials, commercially available products or prototypes manufactured by Fuji Oil Co., Ltd. were used.

♦ Test material

As a sample of powdered soy protein material, a general non-decomposition type commercial product A which was not enzymatically decomposed by protease, commercial products B and C which were enzymatically decomposed, and commercial products D and E which were enzymatically decomposed and to which a divalent metal salt was added were prepared. Next, a prototype "B20" newly produced as a powdered soy protein material was prepared. All of these can be obtained by contacting Fuji Oil Co., Ltd.

The protein content in a solid content of these powdered soy protein materials, the pH of 10% solution, the NSI, the TCA solubility rate, the calcium (Ca) content, and the magnesium (Mg) content were analyzed. Each analysis value is shown in Table 1 below. The contents of Ca and Mg are shown as the contents for protein.

(Table 1)

| Powdered soy protein material | Commercial product A | Commercial product B | Commercial product C | Commercial product D | Commercial product E | Prototype |
|---|---|---|---|---|---|---|
| Enzymatic decomposition | Absent | Present | Present | Present | Present | Absent |
| Mineral addition | Absent | Absent | Absent | Present | Present | Absent |
| Protein content (% in solid content) | 91.0 | 91.8 | 80.1 | 89.6 | 93.0 | 90.9 |
| pH of 10% solution | 6.98 | 7.05 | 3.95 | 6.99 | 6.42 | 6.93 |
| NSI (%) | 99.5 | 65.1 | 19.2 | 45.0 | 34.0 | 25.0 |
| TCA solubility rate (%) | 2.3 | 23.9 | 19.1 | 7.8 | 10.3 | 4.2 |
| Bulk density (g/cm$^3$) | 0.44 | 0.45 | 0.34 | 0.50 | 0.57 | 0.65 |
| Ca content (%) | 0.10 | 0.09 | 0.09 | 0.80 | 0.10 | 0.10 |
| Mg content (%) | 0.09 | 0.09 | 0.09 | 0.08 | 0.38 | 0.09 |

♦ Test Example 1 (Tests T1 to T6)

Neutral liquid protein beverages were prepared as follows using the commercial products A to E and each powdered soy protein material of a prototype, respectively (T1 to T6).

56 g of powdered soy protein material, 30 g of granulated sugar, and 914 g of water were input into a container and stirred with a homomixer at 5000 rpm for 5 minutes to completely disperse the mixture to prepare a preparation solution. Then, an appropriate amount of citric acid or sodium hydroxide was added to the preparation solution so as to have a pH of 6.8, and the mixture was further stirred with a homomixer at 5000 rpm for 5 minutes.

The obtained preparation solution was further supplied to a homogenizer and homogenized at a high pressure of 15 MPa to obtain a pre-sterilization dispersing liquid.

The pre-sterilization dispersing liquid was directly supplied to a steam-blown type high-temperature instantaneous heat treatment device and heat-sterilized at 145°C for 10 seconds to prepare a neutral liquid protein beverage.

As the quality evaluation of each of the obtained beverages, heat resistance evaluation by heat sterilization and sensory evaluation were performed.

(Heat resistance evaluation method)

40 g of the beverages obtained from T1 to T6 were taken and centrifuged at 5000 G for 5 minutes. The supernatant of the centrifuged liquid was removed, and the weight of the precipitate was measured. Then, as an index of heat resistance evaluation by heat sterilization, the centrifugal precipitation rate was calculated by the following equation, and a case where the centrifugal precipitation rate was 7.5% or less was determined as acceptable.

$$\text{(Equation) Centrifugal precipitation rate (\%)} = \text{weight of precipitate}/40 \times 100$$

(Sensory evaluation method)

10 panelists who were skilled in evaluating the flavor of soy protein were asked to sample each beverage. Sensory evaluation was performed on the "taste" and "flavor" according to the following criteria, the evaluations of A to D were given by consensus, and a case of B or higher in the evaluation was determined as acceptable.

O Evaluation criteria for taste

A: There is no viscosity, powderiness, or roughness and taste is clean.
B: There is slight viscosity, powderiness, or roughness, but taste is good.
C: Viscosity, powderiness, or roughness is felt and it is a slightly difficult to drink.
D: Viscosity, powderiness, and roughness are strongly felt and it is not suitable to use for beverage.

O Evaluation criteria for flavor

A: There are almost no soybean odor, bitterness, or other unusual flavors.
B: Soybean odor, bitterness, or other unusual flavors are slightly felt, but the flavor does not require masking.
C: Soybean odor, bitterness, or other unusual flavors are felt, but flavor masking is possible.
D: Soybean odor, bitterness, or other unusual flavors are strongly felt, and it is not suitable to use for beverage.

□ Test Example 2

Assuming that the beverage of Test Example 1 was produced on an actual large scale, a preparation test of the raw materials was conducted under more gentle stirring conditions, and the dispersibility of each powdered plant-based protein material in water was evaluated.

The amount of each powdered soy protein material in Table 1 for making the protein concentration of the beverage 5% was input into a 1 L container, and water was input such that the total amount with the powdered soy protein material was 500 g. The mixture was stirred at 400 rpm using a cross-shaped propeller with $\phi$ = 7 cm. Then, the obtained dispersing liquid was passed through a sieve having an opening of 710 $\mu$m.

Then, after lightly wiping off the water content of the lumps remaining on the upper part of the sieve, the lump weight (g) was measured to evaluate the dispersibility. A case where the lump weight was 10 g or less was determined as acceptable.

(Table 2)

| Test group | T1 | T2 | T3 | T4 | T5 | T6 |
|---|---|---|---|---|---|---|
| Powdered soy protein material | Commercial product A | Commercial product B | Commercial product C | Commercial product D | Commercial product E | Prototype |
| Centrifugal precipitation rate (%) | 3.8 | 11.5 | 10.2 | 12.2 | 13.0 | 1.5 |
| Dispersibility evaluation (lump weight g) | 26 | 8 | 2 | 4 | 2 | 0 |
| Flavor (sensuality) | A | C | C | B | B | A |
| Taste (sensuality) | A | D | D | C | D | A |
| Comprehensive determination | Unacceptable | Unacceptable | Unacceptable | Unacceptable | Unacceptable | Acceptable |

(Table 3) Detailed results of sensory evaluation

| Test group | Flavor | Taste |
|---|---|---|
| T1 | Flavor is good without feeling of soybean odor. | There is slight viscosity, but the taste is good. |
| T2 | Soybean odor and unpleasant taste are felt and the flavor is bad. | Powderiness and roughness are felt and the taste is bad. |
| T3 | Soybean odor and unpleasant taste are felt and the flavor is bad. | Powderiness and roughness are felt and the taste is bad. |
| T4 | Soybean odor is slightly felt. | Powderiness is felt and the taste is bad. |
| T5 | Soybean odor is slightly felt. | Powderiness and roughness are felt and the taste is bad. |

(continued)

| Test group | Flavor | Taste |
|---|---|---|
| T6 | Flavor is good without feeling of soybean odor. | There is slight viscosity, but the taste is good. |

(Discussion)

From Tables 1 and 2 , only the beverage in Test group T6 to which the prototype was added as the powdered soy protein material showed higher acceptable quality than that of the beverages of T1 to T5 to which the commercial products A to E were added in terms of heat resistance, dispersibility, flavor, and taste. In other words, regarding the characteristics of the prototype, it was shown that the prototype was a material having extremely good dispersibility when producing the preparation solution, and high heat resistance that does not cause aggregation and precipitation after heat sterilization, even when the soy protein preparation amount is large. In addition, in T2 to T5 using the enzymatically decomposed powdered soy protein material, the unique unpleasant taste after heat sterilization was generally felt. However, the prototype has no unpleasant taste and was also good in terms of flavor.

Therefore, it was shown that the method for producing a neutral liquid protein beverage from the powdered soy protein material having the characteristics of the prototype was extremely advantageous.

**Claims**

1. A method for producing a neutral liquid protein beverage having a pH of 6 to 8 and a protein content of 1 to 15% by weight, **characterized in that**
   a powdered plant-based protein material that satisfies the following requirements A) to E) is dispersed in a raw material solution, and then the raw material solution is heat-sterilized to dissolve the powdered plant-based protein material,

   A) protein content in a solid content is 80% by weight or more,
   B) pH of 10% by weight aqueous solution is pH 5.5 to 8,
   C) nitrogen solubility index (NSI) is 30 or less,
   D) 0.22 M trichloroacetic acid solubility rate in the powdered plant-based protein material is 4.5% or less, and
   E) bulk density is 0.5 g/cm$^3$ or more.

2. The method for producing a neutral liquid protein beverage according to claim 1, wherein a calcium content in the powdered plant-based protein material with respect to the protein content in the powdered plant-based protein material is 0.6% by weight or less, and a magnesium content with respect to protein is 0.3% by weight or less.

3. The method for producing a neutral liquid protein beverage according to claim 2, wherein a calcium content in the powdered plant-based protein material with respect to the protein content in the powdered plant-based protein material is 0.1% by weight or less.

4. The method for producing a neutral liquid protein beverage according to claim 2 or 3, wherein a magnesium content in the powdered plant-based protein material with respect to the protein content in the powdered plant-based protein material is 0.1% by weight or less.

5. The method for producing a neutral liquid protein beverage according to claim 1 to 4, wherein the C) nitrogen solubility index (NSI) in the powdered plant-based protein material is 5 or more.

6. The method for producing a neutral liquid protein beverage according to claim 1 to 5, wherein the C) nitrogen solubility index (NSI) in the powdered plant-based protein material is 25 or less.

7. The method for producing a neutral liquid protein beverage according to claim 1 to 6, wherein the E) bulk density in the powdered plant-based protein material is 0.55 g/cm$^3$ or more.

8. The method for producing a neutral liquid protein beverage according to claim 1 to 7, wherein content of insoluble dietary fiber in the powdered plant-based protein material is 2% by weight or less in a solid content.

9. The method for producing a neutral liquid protein beverage according to claim 1 to 8, wherein the heat-sterilized is a direct steam blowing type high temperature instantaneous heat treatment.

10. The method for producing a neutral liquid protein beverage according to claim 9 wherein conditions of the heat-sterilized are the range of temperature 100 to 170°C, the range of heating time 0.5 seconds to 5 minutes.

**Patentansprüche**

1. Verfahren zur Herstellung eines neutralen flüssigen Proteingetränks mit einem pH-Wert von 6 bis 8 und einem Proteingehalt von 1 bis 15 Gew.-%, **dadurch gekennzeichnet, dass** ein pulverförmiges Proteinmaterial auf Pflanzenbasis, das die folgenden Anforderungen A) bis E) erfüllt, in einer Rohmateriallösung dispergiert wird und dann die Rohmateriallösung hitzesterilisiert wird, um das pulverförmige Proteinmaterial auf Pflanzenbasis aufzulösen,

   A) Proteingehalt in einem Feststoffgehalt 80 Gew.-% oder mehr beträgt,
   B) pH-Wert der 10 Gew.-% wässrigen Lösung pH 5,5 bis 8 beträgt,
   C) Stickstofflöslichkeitsindex (NSI) 30 oder weniger beträgt,
   D) 0,22 M Trichloressigsäure Löslichkeitsrate in dem pulverförmigen Proteinmaterial auf Pflanzenbasis 4,5 % oder weniger beträgt, und
   E) Schüttdichte 0,5 g/cm$^3$ oder mehr beträgt.

2. Verfahren zur Herstellung eines neutralen flüssigen Proteingetränks gemäß Anspruch 1, wobei ein Calciumgehalt in dem pulverförmigen Proteinmaterial auf Pflanzenbasis, bezogen auf den Proteingehalt in dem pulverförmigen Proteinmaterial auf Pflanzenbasis, 0,6 Gew.-% oder weniger beträgt und ein Magnesiumgehalt, bezogen auf das Protein, 0,3 Gew.-% oder weniger beträgt.

3. Verfahren zur Herstellung eines neutralen flüssigen Proteingetränks gemäß Anspruch 2, wobei ein Calciumgehalt in dem pulverförmigen Proteinmaterial auf Pflanzenbasis, bezogen auf den Proteingehalt in dem pulverförmigen Proteinmaterial auf Pflanzenbasis, 0,1 Gew.-% oder weniger beträgt.

4. Verfahren zur Herstellung eines neutralen flüssigen Proteingetränks gemäß Anspruch 2 oder 3, wobei ein Magnesiumgehalt in dem pulverförmigen Proteinmaterial auf Pflanzenbasis, bezogen auf den Proteingehalt in dem pulverförmigen Proteinmaterial auf Pflanzenbasis, 0,1 Gew.-% oder weniger beträgt.

5. Verfahren zur Herstellung eines neutralen flüssigen Proteingetränks gemäß einem der Ansprüche 1 bis 4, wobei der C) Stickstofflöslichkeitsindex (NSI) in dem pulverförmigen Proteinmaterial auf Pflanzenbasis 5 oder mehr beträgt.

6. Verfahren zur Herstellung eines neutralen flüssigen Proteingetränks gemäß einem der Ansprüche 1 bis 5, wobei der C) Stickstofflöslichkeitsindex (NSI) in dem pulverförmigen Proteinmaterial auf Pflanzenbasis 25 oder weniger beträgt.

7. Verfahren zur Herstellung eines neutralen flüssigen Proteingetränks gemäß einem der Ansprüche 1 bis 6, wobei die E) Schüttdichte in dem pulverförmigen Proteinmaterial auf Pflanzenbasis 0,55 g/cm$^3$ oder mehr beträgt.

8. Verfahren zur Herstellung eines neutralen flüssigen Proteingetränks gemäß einem der Ansprüche 1 bis 7, wobei der Gehalt an unlöslichen Ballaststoffen in dem pulverförmigen Proteinmaterial auf Pflanzenbasis 2 Gew.-% oder weniger in einem Feststoffgehalt beträgt.

9. Verfahren zur Herstellung eines neutralen flüssigen Proteingetränks gemäß einem der Ansprüche 1 bis 8, wobei die Hitzesterilisierung eine sofortige Hochtemperatur-Wärmebehandlung vom Typ Direktdampfblasen ist.

10. Verfahren zur Herstellung eines neutralen flüssigen Proteingetränks gemäß Anspruch 9, wobei Bedingungen für die Hitzesterilisierung in dem Bereich von 100 bis 170°C liegen, der Bereich der Erhitzungszeit 0,5 Sekunden bis 5 Minuten beträgt.

**Revendications**

1. Procédé de production d'une boisson protéinée liquide neutre ayant un pH de 6 à 8 et une teneur en protéines de 1 à 15 % en poids, **caractérisé en ce que** une matière protéique à base de plante en poudre qui satisfait les exigences suivantes A) à E) est dispersée dans une solution de matière brute, puis la solution de matière brute est stérilisée à la chaleur pour dissoudre la matière protéique à base de plante en poudre,

   A) la teneur en protéines dans une teneur solide est de 80 % en poids ou plus,
   B) le pH de 10 % en poids de solution aqueuse est un pH de 5,5 à 8,
   C) l'indice de solubilité d'azote (NSI) est de 30 ou moins,
   D) le taux de solubilité de l'acide trichloroacétique 0,22 M dans la matière protéique à base de plante en poudre est de 4,5 % ou moins et
   E) la masse volumique est de 0,5 g/cm$^3$ ou plus.

2. Procédé de production d'une boisson protéinée liquide neutre selon la revendication 1, dans lequel une teneur en calcium dans la matière protéique à base de plante en poudre par rapport à la teneur en protéines dans la matière protéique à base de plante en poudre est de 0,6 % en poids ou moins et une teneur en magnésium par rapport aux protéines est de 0,3 % en poids ou moins.

3. Procédé de production d'une boisson protéinée liquide neutre selon la revendication 2, dans lequel une teneur en calcium dans la matière protéique à base de plante en poudre par rapport à la teneur en protéines dans la matière protéique à base de plante en poudre est de 0,1 % en poids ou moins.

4. Procédé de production d'une boisson protéinée liquide neutre selon la revendication 2 ou 3, dans lequel une teneur en magnésium dans la matière protéique à base de plante en poudre par rapport à la teneur en protéines dans la matière protéique à base de plante en poudre est de 0,1 % en poids ou moins.

5. Procédé de production d'une boisson protéinée liquide neutre selon la revendication 1 à 4, dans lequel l'indice de solubilité d'azote C) (NSI) dans la matière protéique à base de plante en poudre est de 5 ou plus.

6. Procédé de production d'une boisson protéinée liquide neutre selon la revendication 1 à 5, dans lequel l'indice de solubilité d'azote C) (NSI) dans la matière protéique à base de plante en poudre est de 25 ou moins.

7. Procédé de production d'une boisson protéinée liquide neutre selon la revendication 1 à 6, dans lequel la masse volumique E) dans la matière protéique à base de plante en poudre est de 0,55 g/cm$^3$ ou plus.

8. Procédé de production d'une boisson protéinée liquide neutre selon la revendication 1 à 7, dans lequel la teneur en fibres diététiques insolubles dans la matière protéique à base de plante en poudre est de 2 % en poids ou moins dans une teneur en solides.

9. Procédé de production d'une boisson protéinée liquide neutre selon la revendication 1 à 8, dans lequel le stérilisé à la chaleur est un traitement à la chaleur instantané à température élevée de type soufflage de vapeur directe.

10. Procédé de production d'une boisson protéinée liquide neutre selon la revendication 9, dans lequel les conditions du stérilisé à la chaleur sont dans la plage de température de 100 à 170 °C, la plage de temps de chauffage de 0,5 seconde à 5 minutes.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006075064 A
- WO 200322069 A
- WO 2020196425 A1
- WO 2020196440 A1
- EP 1862079 A1
- WO 2020196425 A
- WO 2020196440 A

**Non-patent literature cited in the description**

- Fifth Edition of Manual for the Standard Tables of Food Composition. *Materials of the Food Composition Subcommittee of the Resources Research Committee of the Science and Technology Agency,* 1997